# EUROPEAN PATENT APPLICATION

(11) **EP 3 691 288 A1**
(43) Date of publication of application: **05.08.2020**
(21) Application number: 18877974.8
(22) Date of filing: 16.11.2018
(51) Int. Cl.: H04N 21/488, H04N 21/434, G10L 13/08

(54) **DISPLAY DEVICE AND CONTROL METHOD THEREFOR**

(30) Priority: 16.11.2017 KR 20170153229
(71) Applicant: Samsung Electronics Co., Ltd., Suwon-si, Gyeonggi-do 16677 (KR)
(72) Inventor: LEE, Yui Yoon, Gyeonggi-do 16677 (KR)
(74) Representative: Appleyard Lees IP LLP
(86) International application number: PCT/KR2018/014145
(87) International publication number: WO 2019/098775

(57) **Abstract**

Disclosed herein is a display apparatus and a control method thereof, and more particularly, to a technology configured to extract captions displayed on a display screen, convert the captions into voice, and output the voice.

The display apparatus includes a display, a sound outputter configured to output sound, and a controller configured to select a caption data acquisition method based on the type of caption displayed on the display, configured to convert the caption data, which is obtained according to the selected caption data acquisition method, into voice data, and configured to allow the sound outputter to output a content of the displayed caption as voice based on the voice data that is converted.

## Description

### BACKGROUND

### 1. Field

The disclosure relates to a display apparatus and a control method thereof, and more particularly, to a technology configured to extract captions displayed on a display screen, convert the captions into voice, and output the voice.

### 2. Description of Related Art.

A display apparatus is a device that processes image signals / image data, which are input from the outside or stored therein, by various processes and displays the processed image signals/ image data as images on a display panel or screen. The display apparatus may be implemented as various devices such as television (TV), monitor, and portable medial player.

The display apparatus may output an image such as a drama or a movie based on previously stored content. Further, the display apparatus may receive content such as various broadcast programs through a network such as the Internet, and output the content as an image. Particularly, the display apparatus may receive content such as breaking news or disaster broadcast from a broadcasting station or an Internet Protocol (IP)-TV server through a network, and output the content.

When a visually impaired user views an image through a display apparatus and further voice is output in a foreign language, the user can't enjoy image content or broadcast because the user can't recognize captions. In recent years, a study for a technique for outputting captions as voice has been carried out, which is to improve the accessibility of visually impaired users to image content and to allow the user to enjoy all kinds of images regardless of languages contained in the content.

### SUMMARY

Therefore, it is an aspect of the disclosure to provide a display apparatus capable of extracting captions displayed on the display apparatus, converting the captions into voice, and outputting the voice, so as to deliver a content of image content to a user regardless of the type of the captions contained in the image content.

Additional aspects of the disclosure will be set forth in part in the description which follows and, in part, will be obvious from the description, or may be learned by practice of the disclosure.

In accordance with an aspect of the disclosure, a display apparatus includes a display, a sound outputter configured to output sound, and a controller configured to select a caption data acquisition method based on the type of caption displayed on the display, configured to convert the caption data, which is obtained according to the selected caption data acquisition method, into voice data, and configured to allow the sound outputter to output a content of the displayed caption as voice based on the voice data.

The controller may select the caption data acquisition method depending on whether the caption displayed on the display is a closed caption or an open caption.

When the caption displayed on the display is the closed caption, the controller may acquire the caption data by separating caption data, which is contained in a broadcast signal received by the display apparatus or caption data contained in image content stored in the display apparatus, from image data that is output on the display.

When the caption displayed on the display is the open caption, the controller may acquire the caption data by performing optical character reader (OCR) on the caption output on the display.

When it is possible to select whether or not to display the caption separately from the image output on the display, the controller may identify the caption displayed on the display as the closed caption.

When it is impossible to select whether or not to display caption separately from the image output on the display, the controller may identify the caption displayed on the display as the open caption.

The controller may convert the acquired caption data into voice data corresponding to the caption displayed on the display.

The controller may synchronize a period of time in which the caption is displayed on the display with a period of time in which a content of the displayed caption is output as the voice.

When the period of time in which the caption is displayed on the display is not identical to the period of time in which the content of the displayed caption is output as the voice, the controller may correct the period of outputting voice by a difference between the period of displaying caption and the period of outputting voice.

The sound outputter may output the voice data as the voice in accordance with the period of displaying caption.

In accordance with another aspect of the disclosure, a control method of a display apparatus includes selecting a caption data acquisition method based on the type of caption displayed on a display, converting the caption data, which is obtained according to the selected caption data acquisition method, into voice data, and allowing a sound outputter to output a content of the displayed caption as voice based on the voice data that is converted.

Selecting the caption data acquisition method may include selecting the caption data acquisition method depending on whether the caption displayed on the display is a closed caption or an open caption.

Acquiring the caption data may include, when the caption displayed on the display is the closed caption, acquiring the caption data by separating caption data, which is contained in a broadcast signal received by the display apparatus or caption data contained in image content stored in the display apparatus, from image data that is output on the display.

Acquiring the caption data may include, when the caption displayed on the display is the open caption, acquiring the caption data by performing optical character reader (OCR) on the caption output on the display.

Identifying the type of caption displayed on the display may include identifying the caption displayed on the display as the closed caption when it is possible to select whether or not to display the caption separately from the image output on the display.

Identifying the type of caption displayed on the display may include identifying the caption displayed on the display as the open caption when it is impossible to select whether or not to display the caption separately from the image output on the display.

Converting the caption data into voice data may include converting the obtained caption data into voice data corresponding to the caption displayed on the display.

The control method may further include synchronizing a period of time in which the caption is displayed on the display with a period of time in which a content of the displayed caption is output as the voice.

The control method may further include, when the period of time in which the caption is displayed on the display is not identical to the period of time in which the content of the displayed caption is output as the voice, correcting the period of outputting voice by a difference between the period of displaying caption and the period of outputting voice.

Outputting a content of the displayed caption as voice may include outputting the voice data as the voice in accordance with the period of displaying caption.

### BRIEF DESCRIPTION OF THE DRAWINGS

These and/or other aspects of the disclosure will become apparent and more readily appreciated from the following description of embodiments, taken in conjunction with the accompanying drawings of which:
FIGS. 1 and 2 are views illustrating a state in which an image containing captions is displayed on a display apparatus according to an embodiment of the disclosure;
FIG. 3 is a view illustrating a state in which an image containing captions is displayed on a display apparatus according to another embodiment of the disclosure;
FIG. 4 is a control block diagram of the display apparatus according to an embodiment of the disclosure;
FIG. 5 is a flow chart illustrating a control method of the display apparatus according to an embodiment of the disclosure;
FIG. 6 is a view illustrating a state in which optical character reader is performed on captions, which is output on a display, according to an embodiment of the disclosure;
FIG. 7 is a view illustrating a state in which voice converted from a closed caption is output according to an embodiment of the disclosure; and
FIG. 8 is a view illustrating a state in which voice converted from an open caption is output according to an embodiment of the disclosure.

### DETAILED DESCRIPTION

In the following description, like reference numerals refer to like elements throughout the specification. Well-known functions or constructions are not described in detail since they would obscure the one or more exemplar embodiments with unnecessary detail. Terms such as "unit", "module", "member", and "block" may be embodied as hardware or software. According to embodiments, a plurality of "unit", "module", "member", and "block" may be implemented as a single component or a single "unit", "module", "member", and "block" may include a plurality of components.

It will be understood that when an element is referred to as being "connected" another element, it can be directly or indirectly connected to the other element, wherein the indirect connection includes "connection via a wireless communication network".

Also, when a part "includes" or "comprises" an element, unless there is a particular description contrary thereto, the part may further include other elements, not excluding the other elements.

Throughout the description, when a member is "on" another member, this includes not only when the member is in contact with the other member, but also when there is another member between the two members.

It will be understood that, although the terms first, second, third, etc., may be used herein to describe various elements, but is should not be limited by these terms. These terms are only used to distinguish one element from another element.

As used herein, the singular forms "a," "an" and "the" are intended to include the plural forms as well, unless the context clearly indicates otherwise.

An identification code is used for the convenience of the description but is not intended to illustrate the order of each step. The each step may be implemented in the order different from the illustrated order unless the context clearly indicates otherwise.

Reference will now be made in detail to embodiments of the disclosure, examples of which are illustrated in the accompanying drawings.

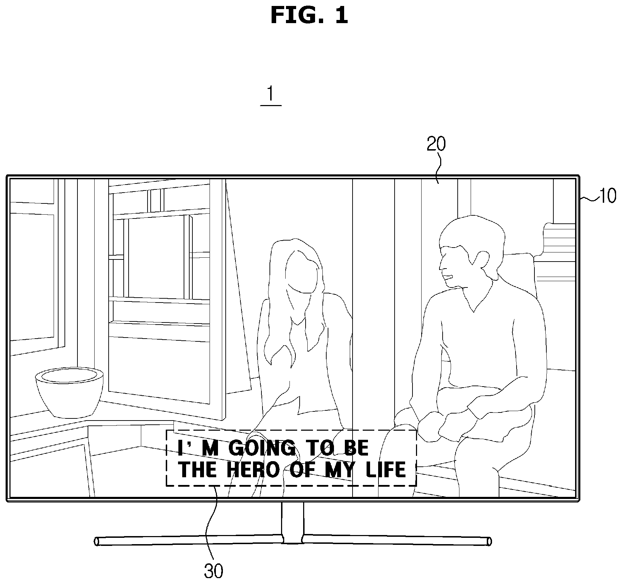

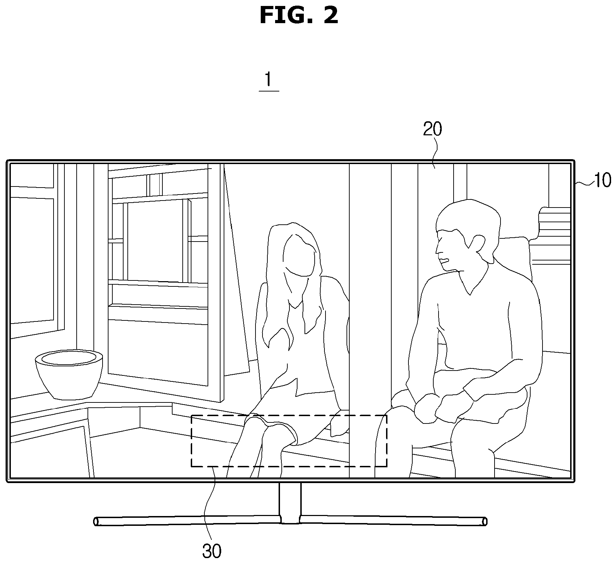

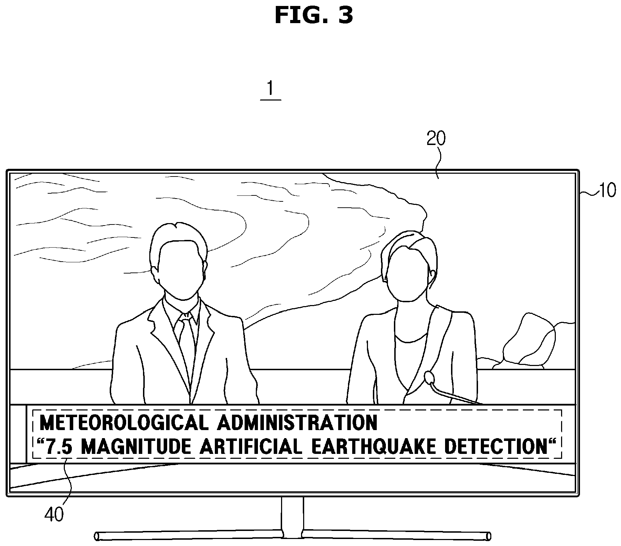

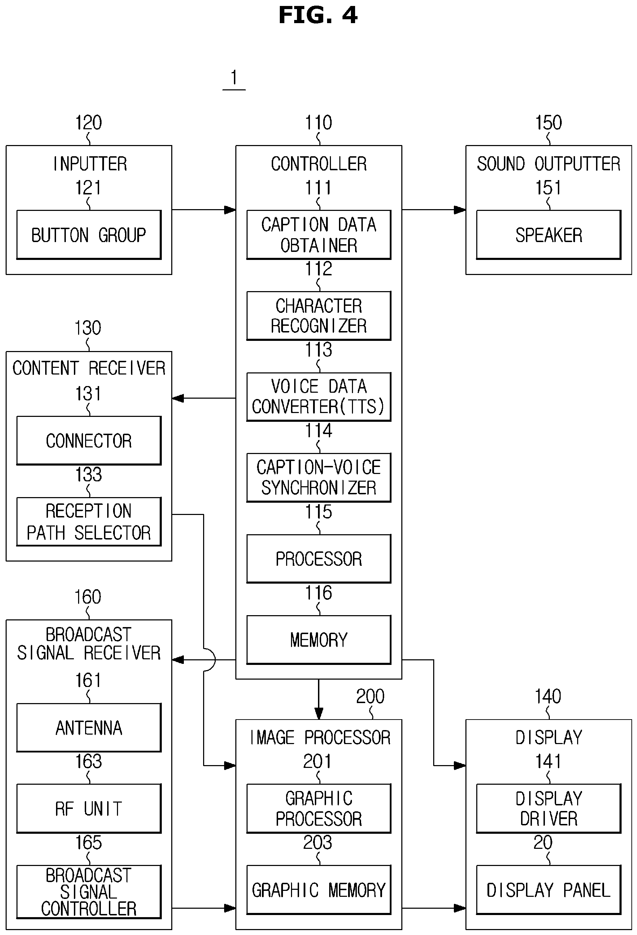

FIGS. 1 and 2 are views illustrating a state in which an image containing captions is displayed on a display apparatus according to an embodiment of the disclosure. FIG. 3 is a view illustrating a state in which an image containing captions is displayed on a display apparatus according to another embodiment of the disclosure. FIG. 4 is a control block diagram of the display apparatus according to an embodiment of the disclosure.

A display apparatus 1 illustrated in FIG. 1 represents an apparatus that is configured to display image data in various formats by including a display panel 20 configured to display an image. According to the appearance of the display apparatus 1, the display apparatus 1 may include a main body 10 configured to accommodate various components and a display 140 configured to display an image to a user. The display 140 may include the display panel 20.

The display 140 may display images of various contents. That is, the display 140 may output image content or broadcasting content, which are received through a content receiver 130 (refer to FIG. 4) and a broadcast signal receiver 160 (refer to FIG. 4), as an image.

Referring to FIGS. 1 and 2, the display 140 may display a caption that is output along with an image. That is, when the image content displayed on the display 140 is a foreign drama or movie, the display 140 may simultaneously display images and captions for the image content.

In this case, depending on the type of captions displayed on the display 140, a user may set the captions to be displayed or not displayed on the display 140 through an inputter 120 (refer to FIG. 4).

The type of the caption, which is displayed together with the images for understanding of the image displayed on the display 140, may be classified according to caption data that is previously stored in the display apparatus 1 or received from an external device.

When the caption data corresponds to a closed caption, the image data displayed on the display 140 and the caption data may be managed separately, and thus the user can set whether or not to display the caption on the display 140.

When the user set the caption to be displayed on the display 140, the caption 30 may be displayed together with the image output on the display 140, as illustrated in FIG. 1. On the other hand, when the user set the caption not to be displayed on the display 140, the caption 30 may not be displayed but the image may be displayed on the display 140, as illustrated in FIG. 2.

That is, when the caption displayed on the display 140 is the closed caption, it is possible to select whether or not to display the caption on the display 140 according to the user' setting.

When the caption data displayed on the display 140 corresponds to an open caption, it is impossible to manage the caption data separately from the image data displayed on the display 140. That is, because the open caption is a form in which the caption data is combined with the image data itself, the user cannot set whether or not to display the caption on the display 140. Therefore, when the image is displayed, the caption may be also displayed.

Referring to FIG. 3, caption data, which is for delivering breaking news or disaster broadcast provided in real time by a broadcasting station, corresponds to the open caption, and the display apparatus 1 decodes text data about the open caption based on a broadcast signal for each channel that is received through the broadcast signal receiver 160.

That is, because the caption data corresponding to the open caption is text data that is recorded on the image data, which is displayed on the display 140, to indicate the content of the image, the user cannot set whether or not to display the caption by operating the display apparatus 1.

As illustrated in FIG. 3, the display 140 may simultaneously output the caption 40 along with the image according to the broadcast signal based on the open caption.

As illustrated in FIGS. 1 to 3, the caption along with the image may be displayed on the display 140 of the display apparatus 1. In this case, when a viewer watching the image is visually impaired, the viewer can hear sound based on the outputted image, but the viewer cannot recognize the caption displayed on the display 140.

Particularly, when the output image content corresponds to content in a foreign language, the caption related to the image may be translated into a native language corresponding to the user's language and then the native language may be output on the display 140. However, the visually impaired user cannot recognize the captions, and cannot obtain information delivered by the image.

When the image content corresponds to the foreign language content, dubbing may be performed on the foreign language content and voice in the native language may be output. However, it is hard to dub all the image content or broadcast. Accordingly, when the caption data related to the caption output on the display 140 is extracted and when the extracted caption data is converted into voice and the voice is output, the visually impaired user can obtain information about the image displayed on the display 140 using the voice output through the display apparatus 1.

In this case, as described above, because the caption data related to the caption displayed on the display 140 is classified into the closed caption and the open caption, the method of extracting the caption data may be different according to the type of caption. Hereinafter a display apparatus and a control method thereof according to an embodiment of the disclosure will be described in detail with reference to FIGS. 4 to 8.

Referring to FIG. 4, the display apparatus 1 includes the inputter 120 configured to receive a control command from a user, the content receiver 130 configured to receive content including images and sound from an external device, the broadcast signal receiver 160 configured to receive a broadcast signal including images and sound from an external device, an image processor 200 configured to process image data included in a broadcast signal or content, the display 140 configured to display an image corresponding to the image data, a sound outputter 150 configured to output sound corresponding sound data included in the broadcast signal or content, and a controller 110 configured to control overall operation of the display apparatus 1.

The inputter 120 may include a button group 121 configured to receive various control commands from a user. For example, the button group 121 may include a volume button configured to adjust volume of sound output from the sound outputter 150, a cannel button configured to change communication channels received through the content receiver 130 or the broadcast signal receiver 160, and a power button configured to turn on/ off the display apparatus 1.

Further, various buttons contained in the button group 121 may employ a push switch and a membrane switch configured to detect a user's pressure or a touch switch configured to detect a user's body contact. However, the button is not limited thereto, and thus the button group 121 may employ various input means capable of outputting an electrical signal in response to a specific operation of the user.

In addition, the inputter 120 may include various well-known components such as a remote controller configured to receive a control command from a user remotely, and transmit the user's control command to the display apparatus 1.

The inputter 120 may receive various control commands related to the operation of the display apparatus 1 from a user through the button group 121 described above, and is not limited thereto. For example, the user may set caption to be displayed or not displayed on the display 140 through the inputter 120 as illustrated in FIGS. 1 and 2.

Meanwhile, as illustrated in FIG. 4, the display apparatus 1 may include the content receiver 130. For example, the content receiver 130 may receive content from a multimedia player (e.g., DVD player, CD player, and Blu-ray player) that plays content stored in multimedia storage medium. Particularly, the content receiver 130 may include a plurality of connectors 131 connected to an external device, and a reception path selector 133 configured to select a path for receiving content among the plurality of connectors 131.

Meanwhile, as illustrated in FIG. 2, the display apparatus 1 may include the broadcast signal receiver 160. The broadcast signal receiver 160 may extract a broadcast signal for each specific frequency (channel) among various signals received through an antenna 161 and convert the extracted broadcast signal appropriately.

Particularly, the broadcast signal receiver 160 may receive a broadcast signal wirelessly through the antenna 161, convert the received broadcast signal appropriately, display a broadcast image on the display 140, and output broadcast sound through the sound outputter 150. The broadcast signal receiver 160 is also referred to as a tuner, but for convenience of description, hereinafter it will be referred to as a broadcast signal receiver.

As illustrated in FIG. 4, the broadcast signal receiver 160 may include the antenna 161, an RF unit 163, and a broadcast signal controller 165. The RF unit 163 and the broadcast signal controller 165 may each be implemented as a single chip. For example, the RF unit 163 may be implemented as an RF module integrated circuit. The broadcast signal controller 165 may be implemented as a demodulation module integrated circuit.

Alternatively, the RF unit 163 and the broadcast signal controller 165 may be implemented as a single chip. For example, the RF unit 163 and the broadcast signal controller 165 may be integrated into a system on chip (SOC) embedded in the broadcast signal receiver 160

The antenna 161 may receive signals of various frequency bands as described above. The antenna 161 may be provided in the inside of the display apparatus 1 or may be provided in the outside of the display apparatus 1, but is not limited thereto.

Meanwhile, an operation in which the antenna 161 receives signals in various frequency bands may be controlled by the broadcast signal controller 165 or the controller 110.

The broadcast signal means a signal including broadcast data related to a broadcast program. Hereinafter broadcast data related to a broadcast program will be referred to as broadcast information for convenience of description. Meanwhile, because broadcast information is different for each channel, a user can view desired broadcast information by changing a channel.

The broadcast signal may be transmitted by being modulated and compressed by various broadcasting methods, and may include only a piece of channel information or a plurality of pieces of channel information. According to an embodiment, the broadcast signal may be a signal of a single carrier according to an Advanced Television System Committee (ATSC) method or a signal of a plurality of carriers according to a Digital Video Broadcasting (DVB) method.

The DVB method includes various known methods such as a Digital Video Broadcasting-Terrestrial version (DVB-T) method and a Digital Video Broadcasting-Terrestrial version T2 (DVB-T2) method. However, the broadcast signal is not limited to the above-described embodiment, and thus the broadcast signal may include all signals including content related to a broadcast program according to various broadcast methods.

The broadcast signal controller 165 may perform an auto scan to search for a channel. Auto scan refers to an operation of searching for a channel existing in an entire frequency band or a specific frequency band.

The image processor 200 may process the image information received from the content receiver 130 or the broadcast signal receiver 160 and provide the processed image information to the display 140. In this case, the image processor 200 may include a graphic processor 201 and a graphic memory 203 as illustrated in FIG. 4.

The graphic processor 201 may process image data stored in the graphic memory 203 according to an image processing program stored in the graphic memory 203.

In addition, the graphic memory 203 may store an image processing program for image processing and image processing information, or temporarily store image information output from the graphic processor 201 or image information received through the content receiver 130 or the broadcast signal receiver 160.

It is assumed that the graphic processor 201 and the graphic memory 203 are separated from each other as mentioned above, but is not limited to the case in which the graphic processor 201 and the graphic memory 203 are provided as a separate chip. Therefore, the graphic processor 201 and the graphic memory 203 may be implemented as a single chip.

The display 140 may include the display panel 20 configured to visually display an image, and a display driver 141 configured to drive the display panel 20.

The display panel 20 may include a pixel corresponding to a unit for displaying an image. Each pixel may receive an electrical signal representing image data and output an optical signal corresponding to the received electrical signal. Accordingly, a single image is displayed on the display panel 20 by combining optical signals output from a plurality of pixels included in the display panel 20.

In addition, the display panel 20 may be classified into several types according to a method in which each pixel outputs an optical signal. For example, the display panel 20 may be classified into a light emitting display that emits light by itself, a transmissive display that blocks or transmits light emitted from a back light, and a reflective display that reflects or absorbs light incident from an external light source.

The display panel 20 may be implemented as a cathode ray tube (CRT) display, a liquid crystal display (LCD) panel, a light emitting diode (LED) panel, an organic light emitting diode (OLED) panel, a plasma display panel (PDP), or a field emission display (FED) panel.

However, the display panel 20 is not limited thereto, and the display panel 20 may employ various display means capable of visually displaying an image corresponding to image data.

The display driver 141 receives the image data from the image processor 200 according to the control signal of the controller 110 and drives the display panel 20 to display an image corresponding to the received image data.

As illustrated in FIG. 1, on the display 140, an image and a caption may be simultaneously displayed, or only an image may be displayed without a caption.

The sound outputter 150 may receive sound information from the content receiver 130 or the broadcast signal receiver 160 according to the control signal of the controller 110 and output sound. At this time, the sound outputter 150 may include one or more speakers 151 configured to convert an electrical signal into a sound signal.

As illustrated in FIG. 4, the display apparatus 1 may include the controller 110 including a caption data extractor 111, a character recognizer 112, a voice data converter 113, a caption-voice synchronizer 114, a processor 115, and a memory 116.

A configuration and function of the caption data extractor 111, the character recognizer 112, the voice data converter 113, and the caption-voice synchronizer 114 contained in the controller 110 of the display apparatus 1 according to an embodiment will be described later.

The memory 116 may store control programs and control data for controlling the operation of the display apparatus 1, and temporarily store a user control command received through the inputter 120 or a control signal output by the processor 115.

The processor 115 may control the overall operation of the display apparatus 1. For example, the processor 115 may generate a control signal for controlling the components of the display apparatus 1, thereby controlling the operation of each component.

According to an embodiment, in response to a channel searching command input through the inputter 120, the processor 115 may transmit the control signal to the broadcast signal receiver 160 so as to allow the channel searching to be performed. According to another embodiment, in response to a sound control command input through the inputter 120, the processor 115 may transmit a control signal to the sound outputter 150 to allow the volume of sound output through the speaker 151 to be adjusted. According to another embodiment, the main control unit 111 may allow the image processor 200 to perform the image processing on image information received from the broadcast signal receiver 160, and to allow the display 140 to display the image data in which the image processing is performed.

Meanwhile, the processor 115 may not only control the operation of the broadcast signal controller 165, but may directly perform an operation that is performed by the broadcast signal controller 165. For example, the processor 115 and the broadcast signal controller 165 may be integrated and implemented as a single chip. Accordingly, the processor 115 may not only control the overall operation of the broadcast signal controller 165, but may directly perform an operation performed by the broadcast signal controller 165.

In addition, the processor 115 may process various data stored in the memory 116 according to a control program stored in the memory 116. It is assumed that the processor 115 and the memory 116 are separated from each other as mentioned above, but is not limited to the case in which the processor 115 and the memory 116 are provided as a separate chip. Therefore, the processor 115 and the memory 116 may be implemented as a single chip.

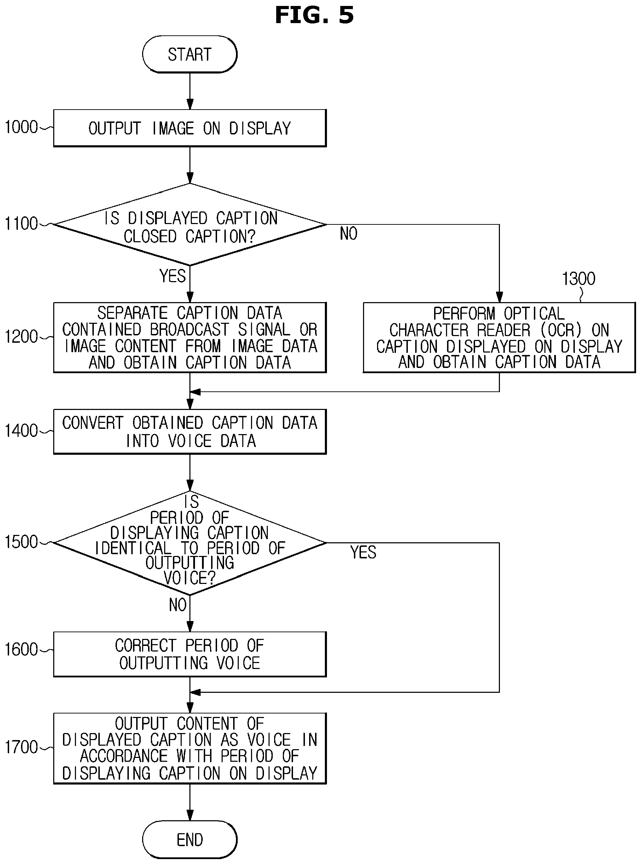

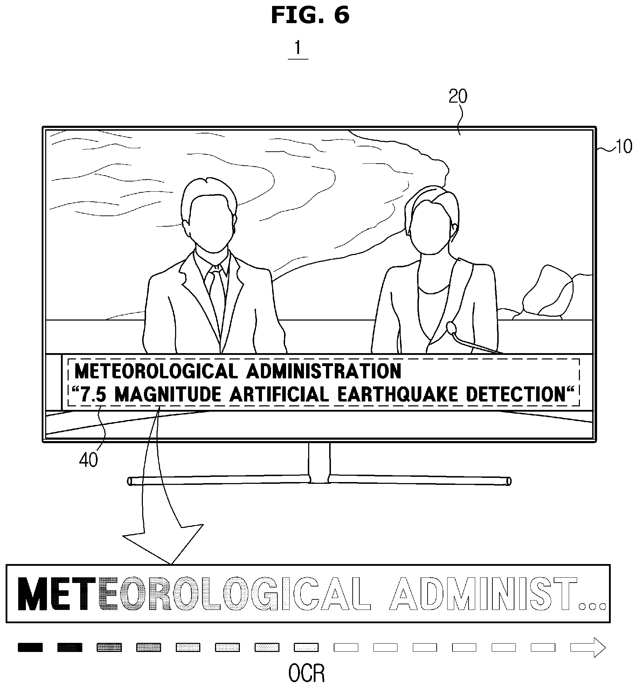

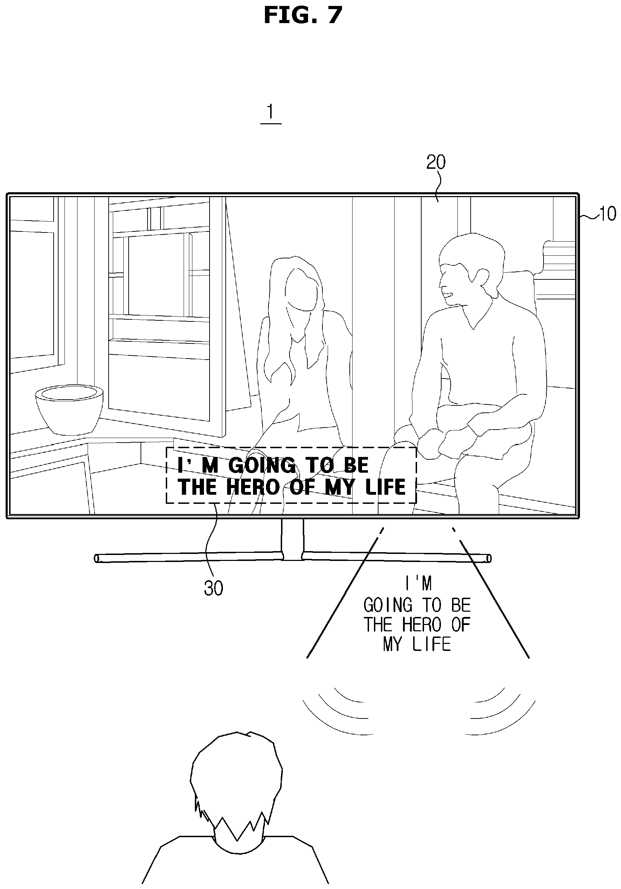

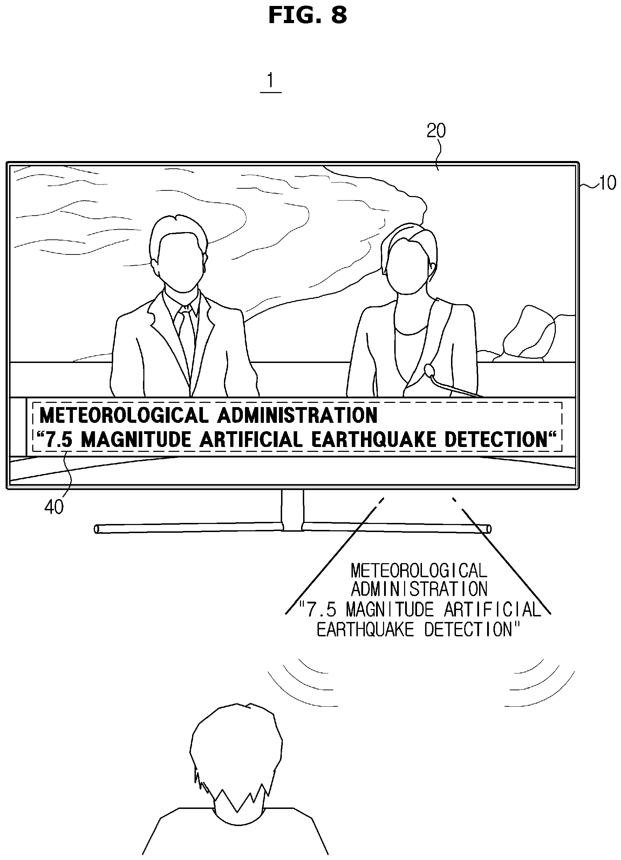

FIG. 5 is a flow chart illustrating a control method of the display apparatus according to an embodiment of the disclosure. FIG. 6 is a view illustrating a state in which optical character reader is performed on captions, which is output on a display, according to an embodiment of the disclosure. FIG. 7 is a view illustrating a state in which voice converted from a closed caption is output according to an embodiment of the disclosure. FIG. 8 is a view illustrating a state in which voice converted from an open caption is output according to an embodiment of the disclosure.

Referring to FIG. 5, the controller 110 may allow an image to be output on the display 140 (1000). That is, the controller 110 may allow the image content previously stored in the display apparatus 1 to be output on the display 140. The controller 110 may allow the image content or broadcast content received through the content receiver 130 and the broadcast signal receiver 160 to be output on the display 140.

The controller 110 may select a method for the display apparatus 1 to obtain caption data based on the type of caption displayed on the display 140. As described above, captions displayed on the display 140 may be classified into the closed caption and the open caption, and a method of obtaining caption data may vary according to the type of caption.

That is, the controller 110 may identify whether the caption displayed on the display 140 is the closed caption or the open caption (1100), and select a method of obtaining caption data.

When it is possible to select whether or not to display captions separately from the image output on the display 140, the controller 110 may identify the captions displayed on the display 140 as the closed caption. On the other hand, when it is impossible to select whether or not to display captions separately from the image output on the display 140, the controller 110 may identify the captions displayed on the display 140 as the open caption.

That is, the controller 110 may identify whether the caption data is the closed caption or the open caption based on whether or not displaying of the caption displayed on the display 140 is selected according to a user's setting.

When the caption displayed on the display 140 is the closed caption as illustrated in FIGS. 1 and 2, the caption data obtainer 111 may separate caption data contained in the broadcast signal received by the display apparatus 1 or caption data contained the image content stored in the display apparatus 1, from image data output on the display 140, thereby obtaining the caption data (1200).

That is, when the caption displayed on the display 140 is the closed caption as illustrated in FIG. 1, the caption data obtainer 111 may obtain the caption data, which is separated from the image data, and transmit the caption data to the voice data converter 113 because the caption data is managed independently of the image data displayed on the display 140.

On the other hand, when the caption displayed on the display 140 is the open caption as illustrated in FIG. 3, the character recognizer 112 may perform optical character reader (OCR) on the caption output on the display 140 and obtain caption data (1300).

That is, when the caption displayed on the display 140 is the open caption, the caption data is not managed independently of the image data displayed on the display 140 and the caption data is combined with the image data itself. Therefore, according to the OCR technology, the character recognizer 112 may recognize characters among the caption data combined with the image data and then the character recognizer 112 may transmit the obtained character to the voice data converter 113.

As illustrated in FIG. 6, the character recognizer 112 may perform the OCR on the caption 40 displayed on the display 140 to obtain text data displayed with an image. That is, the character recognizer 112 may perform the OCR on the caption 40 in the form of an image, convert the caption into a text-type caption, and obtain caption data.

At this time, the character recognizer 112 may detect a region where the caption 40 displayed along with the image output on the display 140 is located, and perform the OCR on the detected region. That is, when the caption data is the open caption, the image data displayed on the display 140 and the caption data may not be separated from each other. Therefore, the character recognizer 112 may recognize the region where the caption is displayed on the display 140 and then perform the OCR on text data contained in the corresponding region.

The voice data converter 113 may convert the caption data acquired by the caption data obtainer 111 or the character recognizer 112 into voice data (1400). That is, the voice data converter 113 may convert the acquired caption data into voice data corresponding to the content of the caption displayed on the display 140.

The voice data converter 113 may convert the caption data into the voice data based on a text-to-speech (TTS) technology. According to a voice matching table stored in the memory 116, the voice data converter 113 may select a voice type based on the type or the content of the caption output on the display 140.

When receiving the caption data obtained from the caption data obtainer 111 or the character recognizer 112, the voice data converter 113 may match the received caption data with a pre-stored voice matching table, select the voice type to be output, and convert the caption data into voice data.

For example, as illustrated in FIGS. 1 and 2, when the content of the captions displayed on the screen of a foreign movie needs to be output as a female's voice, the voice data converter 113 may match the received caption data with female voice type data in the matching table information, and convert the content of the caption into female voice data.

In addition, as illustrated in FIG. 3, when the content of the caption displayed on the screen of the disaster broadcast or the breaking news is output as voice, the voice data converter 113 may match the received caption data with the voice type of a male announcer or the voice type of a female announcer in the matching table information that is pre-stored, and convert the content of the caption into male voice data or female voice data.

Based on the voice data, the caption-voice synchronizer 114 may identify whether a period of time in which the caption is displayed on the display 140 is identical to a period of time in which the content of the displayed caption is output as voice (1500), and the caption-voice synchronizer 114 may synchronize a period of displaying caption with a period of outputting voice.

That is, the caption-voice synchronizer 114 may match a caption display timing with a voice output timing and thus the voice data may be output through the sound outputter 150 at a point of time at which the caption is displayed on the display 140.

In addition, the caption-voice synchronizer 114 may match a caption display end timing with a voice output end timing and thus the outputting of the voice data through the sound outputter 150 may be finished at a point of time at which the displaying of the caption on the display 140 is finished.

Further, the caption-voice synchronizer 114 may match the period of displaying caption with the period of outputting voice and thus the voice data may be output through the sound outputter 150 during the caption is displayed on the display 140.

When the period of time in which the caption is displayed on the display 140 is not identical to the period of time in which the content of the displayed caption is output as voice, the caption-voice synchronizer 114 may correct a difference between the period of displaying caption and the period of outputting voice (1600). That is, by adjusting the voice output timing and the voice output end timing, the caption-voice synchronizer 114 may match the period of outputting voice with the period in which the caption on the display 140 is output.

Referring to FIGS. 7 and 8, the controller 110 may control the sound outputter 150 and thus the display content of the caption displayed on the display 140 may be output as voice based on the voice data (1700).

That is, as illustrated in FIG. 7, caption data corresponding to the closed caption displayed on the display 140 may be obtained by the caption data obtainer 111 and converted into voice data by the voice data converter 113. The period of outputting voice of the voice data may be synchronized by the caption-voice synchronizer 114 and then the voice data may be output through the sound outputter 150.

In addition, as illustrated in FIG. 8, caption data corresponding to the open caption displayed on the display 140 may be obtained by the character recognizer 112 and converted into voice data by the voice data converter 113. The period of outputting voice of the voice data may be synchronized by the caption-voice synchronizer 114 and then the voice data may be output through the sound outputter 150.

As mentioned above, the controller 110 may convert caption data output on the display 140 into voice data so as to allow the voice data to be output as voice in accordance with the image on the display 140 and the period of displaying caption.

As is apparent from the above description, it is possible for a visually impaired user to recognize the content of the image content without dubbing on the image because the display apparatus may output the caption, which is not recognized by the visually impaired user, as voice.

Further, it is possible to deliver the content of the image content to a viewer regardless the type of caption contained in the image content because the display apparatus may extract caption displayed on the display apparatus, convert the caption into voice, and output the voice.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer- readable recording medium includes all kinds of recording media in which instructions which can be decoded by a computer are stored. For example, there may be a Read Only Memory (ROM), a Random Access Memory (RAM), a magnetic tape, a magnetic disk, a flash memory, and an optical data storage device.

Although a few embodiments of the disclosure have been shown and described, it would be appreciated by those skilled in the art that changes may be made in these embodiments without departing from the principles and spirit of the disclosure, the scope of which is defined in the claims and their equivalents.

## Claims

1. A display apparatus comprising:
a display;
a sound outputter configured to output sound; and
a controller configured to select a caption data acquisition method based on the type of caption displayed on the display, configured to convert the caption data, which is obtained according to the selected caption data acquisition method, into voice data, and configured to allow the sound outputter to output a content of the displayed caption as voice based on the voice data.

2. The display apparatus of claim 1, wherein
the controller selects the caption data acquisition method depending on whether the caption displayed on the display is a closed caption or an open caption.

3. The display apparatus of claim 2, wherein
when the caption displayed on the display is the closed caption, the controller acquires the caption data by separating caption data, which is contained in a broadcast signal received by the display apparatus or caption data contained in image content stored in the display apparatus, from image data that is output on the display.

4. The display apparatus of claim 2, wherein
when the caption displayed on the display is the open caption, the controller acquires the caption data by performing optical character reader (OCR) on the caption output on the display.

5. The display apparatus of claim 2, wherein
when it is possible to select whether or not to display the caption separately from the image output on the display, the controller identifies the caption displayed on the display as the closed caption.

6. The display apparatus of claim 2, wherein
when it is impossible to select whether or not to display caption separately from the image output on the display, the controller identifies the caption displayed on the display as the open caption.

7. The display apparatus of claim 1, wherein
the controller converts the acquired caption data into voice data corresponding to the caption displayed on the display.

8. The display apparatus of claim 1, wherein
the controller synchronizes a period of time in which the caption is displayed on the display with a period of time in which content of the displayed caption is output as the voice.

9. The display apparatus of claim 1, wherein
when the period of time in which the caption is displayed on the display is not identical to the period of time in which the content of the displayed caption is output as the voice, the controller corrects the period of outputting voice by a difference between the period of displaying caption and the period of outputting voice.

10. The display apparatus of claim 1, wherein
the sound outputter outputs the voice data as the voice in accordance with the period of displaying caption.

11. A control method of a display apparatus comprising:
selecting a caption data acquisition method based on the type of caption displayed on a display;
converting the caption data, which is obtained according to the selected caption data acquisition method, into voice data; and
allowing a sound outputter to output a content of the displayed caption as voice based on the voice data that is converted.

12. The control method of claim 11, wherein
selecting the caption data acquisition method comprises selecting the caption data acquisition method depending on whether the caption displayed on the display is a closed caption or an open caption.

13. The control method of claim 12, wherein
acquiring the caption data comprises, when the caption displayed on the display is the closed caption, acquiring the caption data by separating caption data, which is contained in a broadcast signal received by the display apparatus or caption data contained in image content stored in the display apparatus, from image data that is output on the display.

14. The control method of claim 12, wherein
acquiring the caption data comprises, when the caption displayed on the display is the open caption, acquiring the caption data by performing optical character reader (OCR) on the caption output on the display.

15. The control method of claim 12, wherein
identifying the type of caption displayed on the display comprises identifying the caption displayed on the display as the closed caption when it is possible to select whether or not to display the caption separately from the image output on the display, and identifying the caption displayed on the display as the open caption when it is impossible to select whether or not to display the caption separately from the image output on the display.
